Europäisches Patentamt

European Patent Office

Office européen des brevets

(19)

(11) Publication number: **0 137 991**
**A1**

(12) **EUROPEAN PATENT APPLICATION**

(21) Application number: **84110195.9**

(22) Date of filing: **28.08.84**

(51) Int. Cl.⁴: **G 06 F 3/023**

(30) Priority: **02.09.83 JP 161534/83**

(43) Date of publication of application: **24.04.85**
**Bulletin 85/17**

(84) Designated Contracting States: **AT CH DE FR GB IT LI NL SE**

(71) Applicant: **MITSUBISHI DENKI KABUSHIKI KAISHA, 2-3, Marunouchi 2-chome Chiyoda-ku, Tokyo 100 (JP)**

(72) Inventor: **Asahina, Tamotsu c/o MITSUBISHI DENKI K.K., Information Systems and Elec. Development Lab., 325, Kamimachiya Kamakura-shi Kanagawa (JP)**

(74) Representative: **Eisenführ & Speiser, Martinistrasse 24, D-2800 Bremen 1 (DE)**

(54) **Code control system in terminal equipment.**

(57) A code control system of a terminal equipment having a keyboard and a display unit and communicating with a signal processing unit which processes the signal given by the terminal equipment, in which an external memory storing purpose selection codes corresponding to key-entries is added to the signal processing unit, and the purpose selection code is converted into purpose selection data corresponding to the purpose of the terminal equipment or character display data on the basis of a plurality of code conversion tables stored in the signal processing unit. When the key arrangement of the keyboard is changed according to the purpose of the terminal equipment, the modification of the code control system is carried out only through the change of the purpose selection codes stored in the external memory or a purpose selector switch, without requiring the full modification of the terminal equipment.

# CODE CONTROL SYSTEM IN TERMINAL EQUIPMENT

## BACKGROUND OF THE INVENTION

### Field of the Invention

The present invention relates to a code control system of a terminal equipment functioning as an interface for the conversation between the operator and the electronic computer.

### Description of the Prior Art

The terminal equipment of this type is operated generally by an operator. When the terminal equipment is used in different countries, it is necessary, for instance, to change the keyboard arrangement or to enable the input or the display of special characters in order to help the operator understand the electronic computer. It is a simple way of modification to modify the basic terminal equipment to provide several kinds of terminal equipments. A general terminal equipment will be described prior to the description of the modification of the terminal equipment.

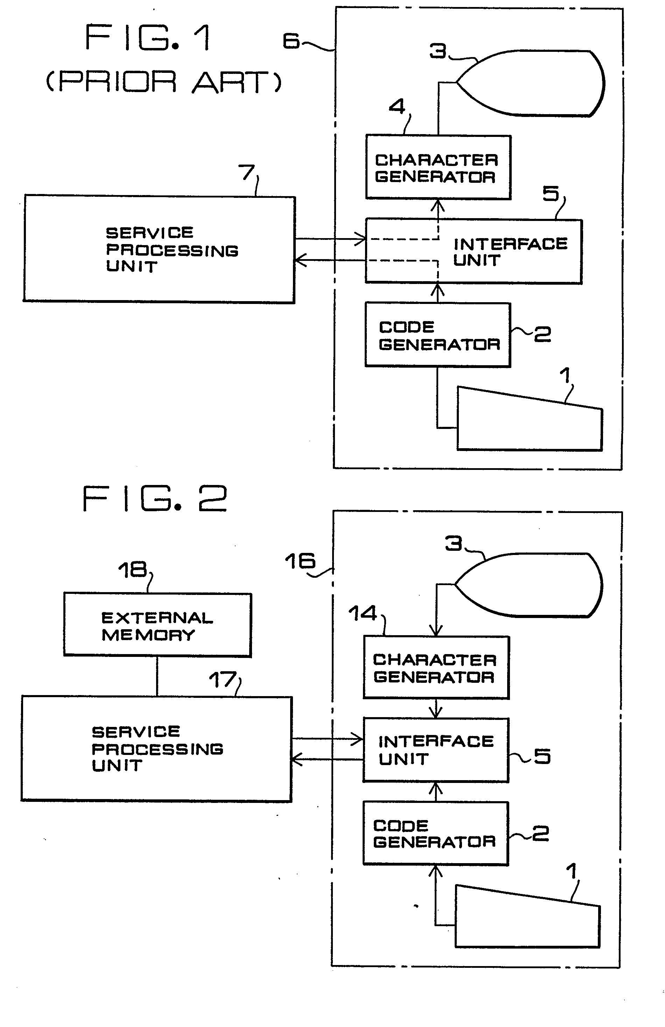

Referring to Fig. 1, there are shown a keyboard 1, a code generator 2 capable of generating a code corresponding to a key provided on the keyboard when the same is depressed, a display unit 3, a character generator 4 capable of generating the data to be displayed on the display unit 3, an interface unit 5 communicating the terminal equipment with their units, the terminal

2

equipment 6 and a service processing unit 7 which controls the terminal equipment 6.

For the conventional terminal equipment of above mentioned constitution, when a specific key of the keyboard 1 is pressed, the code generator 2 generates a code corresponding to the pressed key and the generated code is transferred through the interface unit 5 to the service processing unit 7. On the other hand, the data transferred through the service processing unit 7 is received by the interface unit 5 and is converted into a display pattern code by the character generator 4, and then the display pattern code is transferred to and displayed on the display unit 3.

In the conventional terminal equipment as described hereinbefore, the objective parts of modification for the reasons as mentioned above are key tops arranged on the keyboard 1, the code generator 2 and the character generator 4. However, the conventional terminal equipments need the change of many parts for modification, and hence the modification and the inspection of the terminal equipment requires much time in addition to very expensive parts for replacement.

### SUMMARY OF THE INVENTION

The present invention has been made in view of those disadvantages of the conventional terminal equipment.

3

Accordingly, it is an object of the present invention to provide a code control system of a terminal equipment, enabling the modification of the terminal equipment only through the change of the characters engraved in or labeled on the key tops arranged on the keyboard and the change of the data indicating the purpose of the terminal equipment when the purpose of the terminal equipment is changed, by making possible the change of the code generated by the operation of the keys to be changed and/or the change of the code to be transferred for display, by another processing unit without modifying the keyboard and the associated code generating unit.

According to a preferred embodiment of the present invention, when a predetermined key of the keyboard is pressed, a code corresponding to the key information is given to a service processing unit and an external memory connected to the service processing unit gives a purpose selection code. The purpose selection code is converted into a code corresponding to the key information on the basis of a code conversion table. As regard character display, a purpose selection code is fetched from the external memory and is converted according to a code conversion table for character display data, and then the character generator of the terminal equipment generates a pattern code, which is displayed on the display unit. Accordingly, even if the keyboard

- 3 -

arrangement is changed according to the operating characteristics of the operator, the modification of the terminal equipment is attained only through the change of the key tops of the keyboard and the code for the external memory.

## BRIEF DESCRIPTION OF THE DRAWINGS

Figure 1 is a block diagram showing the constitution of a conventional terminal equipment;

Figure 2 is a block diagram showing the constitution of a terminal equipment of a system, in a first embodiment, according to the present invention;

Figure 3 is a block diagram showing the procedure of processing the data key-entered by the use of a terminal equipment according to the present invention;

Figure 4 is a block diagram showing the procedure of display data processing on a terminal equipment according to the present invention;

Figure 5 is a perspective view showing the general constitution of a system according to the present invention;

Figure 6 is a more detailed block diagram of a preferred embodiment of the present invention for facilitating the explanation of the operation;

Figure 7 is a view showing an example of a menu displayed on the display unit of Fig. 6; and

Figure 8 is a view showing another embodiment of an external memory employed in the system according to the present invention.

5

## DESCRIPTION OF THE PREFERRED EMBODIMENTS

The invention will be described hereinafter in connection with the accompanying drawings. Fig. 2 shows a preferred embodiment of the present invention, in which like reference numerals as those used to indicate the component of the conventional terminal equipment shown in Fig. 1 indicate like components and, therefore, the description of the same will be omitted.

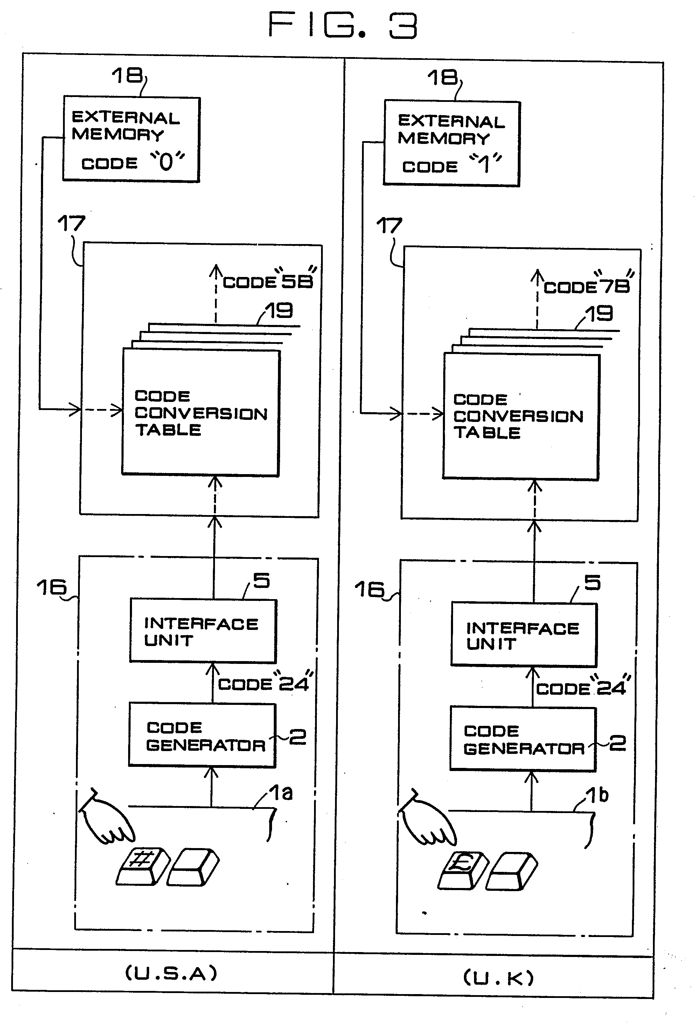

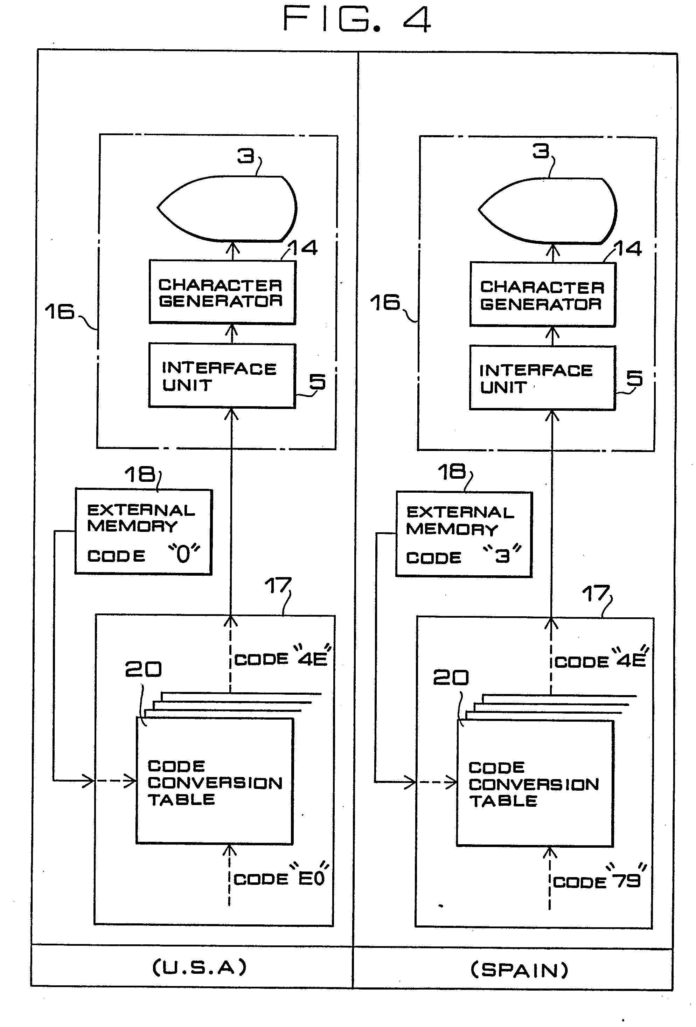

Referring to Fig. 2, a terminal equipment 16 is the same as the conventional terminal equipment 6, except that a character generator 14 stores character patterns corresponding to a plurality of the purposes of the terminal equipment 16. Indicated at 18 is an external memory for storing the purpose selection codes of the terminal equipment 16. Fig. 3 is a block diagram explaining the mode of operation of the system when a key provided on the keyboard 1 is pressed. In Fig. 3, indicated at 19 are code conversion tables for purpose selection among key entry codes. Fig. 4 is a block diagram explaining the mode of operation of the system to display characters on a display unit 3, in which indicated at 20 are character display data code conversion tables.

Since the code control system of the terminal equipment of the present invention is constituted as mentioned above, when a predetermined key on the keyboard 1 is pressed, the code generator 2 generates a single code regardless of the purpose of the terminal equipment. This single code is transferred through an interface device 5 to a service processing unit 17. The service processing unit 17 fetches the purpose selection code which is set presently from the external memory 18 and selects one of the code conversion table 19 according to the contents of the purpose selection code, and then generates a code corresponding to the pressed key on the basis of the selected code conversion table. The code conversion table 19 is designed to enable code conversion to a different system, for example, from "ASCII Code" to "EBSDIC Code".

The processing procedures of two kinds of terminal equipments for "USA Edition" and "ENGLAND Edition" will be described in connection with Fig. 3. When the keys "#" and "£" of the keyboards 1a and 1b are pressed, both the code generators 2 generates a hexadecimal code "23". Upon the reception of this hexadecimal code, the service processing units 17 fetch a purpose selection code from the corresponding external memories 18. The "USA Edition" and the "ENGLAND Edition" obtain purpose selection codes "0" and "1" respectively. Then, one of the code conversion tables 19 is selected according to the purpose selection code. As the result of data conversion, hexadecimals "5B" and "7B" are generated in the "USA Edition" and the "ENGLAND Edition" respectively.

The character display system will be described hereinafter in connection with Fig. 4. The display data stored in the service processing unit 17 is converted by the use of the code conversion table 20 and a display code is generated. If 7-unit code is used in generating the display code, special characters can be displayed by the definition of another code table by the use of codes "EXTENSION IN" and "EXTENSION OUT" similarly to the extension of the code table by the use of codes "SHIFT IN" and "SHIFT OUT". Accordingly, in some cases, a plurality of codes are generated on the basis of a single input data. The display systems of two kinds of terminal equipments, "USA Edition" and "SPAIN Edition" will be described concretely. When, for example, a character slash "/" is required to be displayed, different data are given to the respective code converters 20 of the "USA Edition" and the "SPAIN Edition" respectively, namely, a hexadecimal code "EO" for the "USA Edition" and a hexadecimal code "79" for the "SPAIN Edition". The service processing units 17 fetches purpose selection codes from the corresponding external memories 18, "0" for the "USA Edition" and "3" for the "SPAIN Edition". Code conversion tables 20 are selected according to the purpose selection codes and code conversion is performed. Then, the same hexadecimal codes "4E" are given both for the "USA Edition" and for the "SPAIN Edition". The codes "4E" are transferred to the terminal equipments 16 respectively and are given through the interface devices 5 to the character generators 14, which generate display pattern codes and both the display units 3 of the "USA Edition" and the "SPAIN Edition" display slashes "/" respectively. According to this system, the modification of the terminal equipment is attained simply by changing the engraved or labeled characters of the key tops of the keyboard 1 and the purpose selection code provided on the external memory indicating the purpose of the terminal equipment. Since the service processing unit 17 is provided with a flexible disk unit as an external memory, it goes without saying that it is necessary only to reload the information of one byte in the disk sheet.

The preferred embodiment of the present invention which has been described hereinbefore will be described more concretely and more specifically hereinafter.

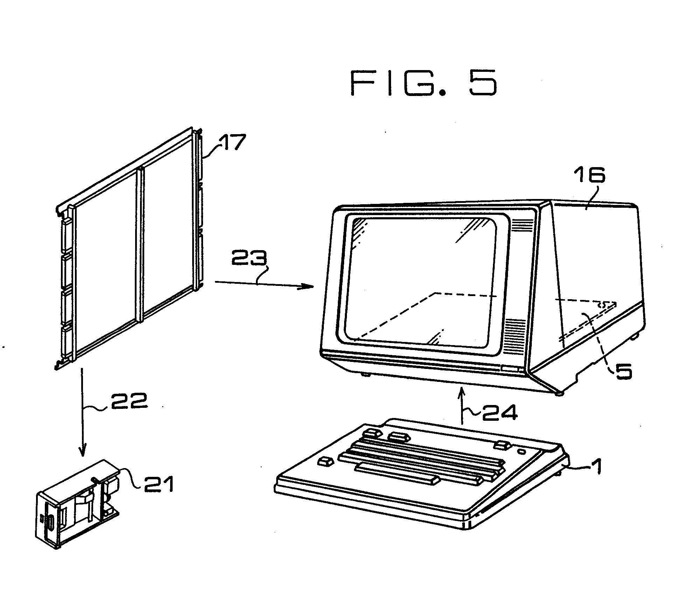

Fig. 5 is a perspective view showing the general constitution of the system embodying the present invention. Referring to Fig. 5, there are shown a flexible disk device (FDD) 21 corresponding to the external memory 18 of Fig. 2, an interface signal line 22 connecting the flexible disk device 21 and a service processing unit 17, an interface signal line 23 connecting the service processing unit 17 and an interface device 5 included in a terminal equipment 16 and an interface signal line 24 connecting a keyboard 1

and a code generator 2. Like reference characters indicate like or corresponding parts through Figs. 2 and 5.

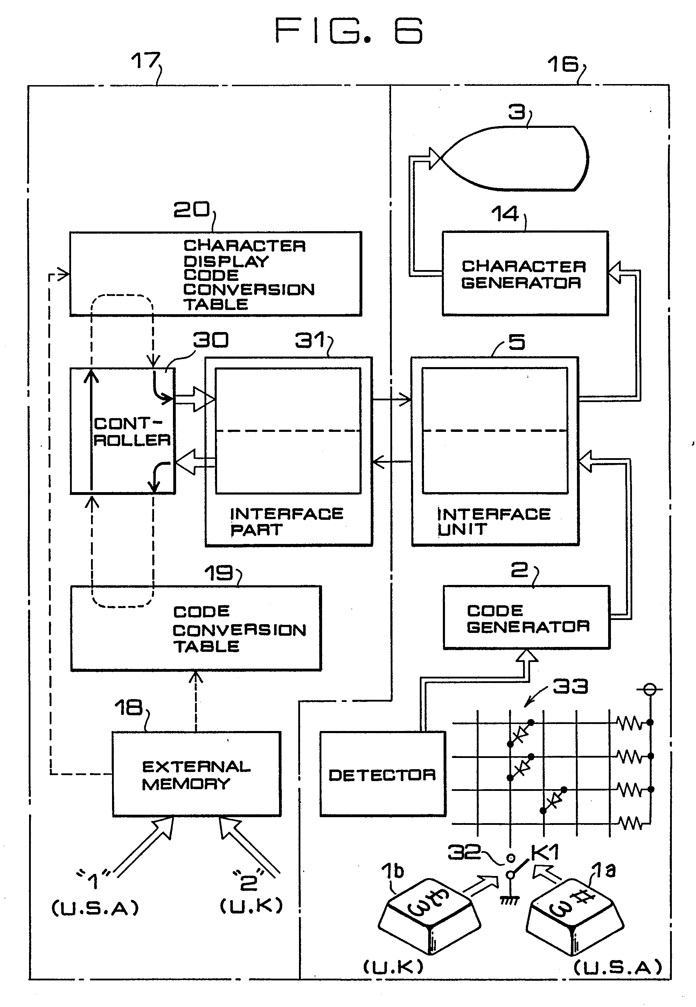

Fig. 6 is a detailed block diagram showing the constitution of the embodiment of the present invention. In Fig. 6, there are shown a controller 30 included in the service processing unit 17, an interface PART 31 included in the service processing unit 17 and communicating with the terminal equipment 16, a key switch 32 of the keyboard 1 and a diode matrix 33 which generates a specific output signal when the key switch is operated.

The manner of operation of this embodiment will be described hereinafter with reference to a terminal equipment of the "USA Edition" and a terminal equipment of the "ENGLAND Edition".

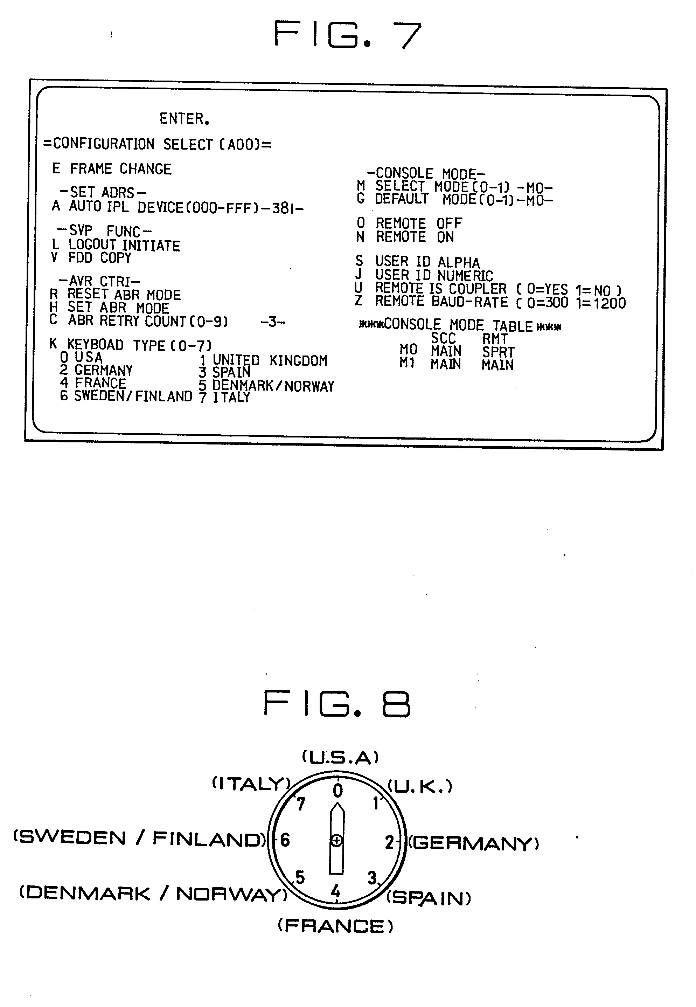

Referring to Fig. 6, in the keyboard of the "USA Edition", the switch Kl 32 is provided with a key top la having characters "#, 3" engraved thereon. A purpose selection code "Keyboard type = 0" is selected from the menue displayed on the display unit as shown in Fig. 7 and entered to assign the purpose. The entered code is written in the flexible disk device 21. In the "USA Edition", since the purpose selection code is "0", a key entry code conversion table 19 and a character display code conversion table 20 each of index = 0 are selected. For example, when "#" is entered from the keyboard 1, the code generator 2 generates a hexadecimal code "23".

*10*

This code is transferred through the interface device 5 of the terminal equipment 16 and the interface device 31 of the service processing unit 17 to the controller 30 of the service processing unit 17. The controller 30 converts this code on the basis of the key entry code conversion table 19 of the index = 0 to provide a hexadecimal code "7B". This code "7B" is treated as an internal code (EBCDJC code). The controller 30 converts this code on the basis of the character display code conversion table 20 of the index = 0 to provide a hexadecimal code "23". This code "23" is transferred through the interface device 31 of the service processing unit 17 and the interface device 5 of the terminal equipment 16 to the character generator 14. Then, the character generator 14 generates a display pattern corresponding to the code received and sends the same to the display unit 3. Consequently, the display unit 3 displays "#".

In the keyboard of the "ENGLAND Edition", the switch Kl 32 is provided with a key top lb having characters "£, 3" engraved thereon. A purpose selection code "Keyboard type = 1" is selected from the menue displayed on the display unit as shown in Fig. 7 and entered to assign the purpose. Consequently, in the "ENGLAND Edition", a key entry code conversion table 19 and a character display code conversion table 20 each of index = 1 are selected. When "£" is entered from the keyboard, the code generator 2 generates a hexadecimal code "23", which is the same as the code generated when "#" is entered in the "USA Edition". This code is transferred through the transfer device 5 of the terminal equipment 16 and the interface device 31 of the service processing unit 17 to the controller 30. Then, the controller 30 converts this code into a hexadecimal code "7B" on the basis of the key entry code conversion table 19 of index = 1. This result of conversion is the same as that of "#" of the "USA Edition", because the internal code (EBCDJC code) generated by the controller 30 is defined by "7B" both for "#" of the "USA Edition" and for "£" of the "ENGLAND Edition". If the internal code (EBCDJC code) is different between the "USA Edition" and the "ENGLAND Edition", the conversion on the basis of the key entry conversion table 19 provides different codes.

In the "ENGLAND Edition", the internal code "7B" is displayed in the following manner. The controller 30 converts the code on the basis of the character display code conversion table 20 of index = 1 and provides a hexadecimal code "41" included in the extended range. The controller 30 sends three codes in the order of codes "EXTENSION IN", "41" and "EXTENSION OUT" through the transmitter of the interface device 31 to the terminal equipment 16 to notice the terminal equipment 16 that the code "41" is a code of the extended range.

- 11 -

The terminal equipment 16 changes the code table of the character generator 14 into the extended range upon the reception of the code "EXTENSION IN", displays character "£" on the display unit 3 upon the reception of the code "41", and then returns the code table of the character generator 14 from the extended range to the normal range upon the reception of the code "EXTENSION OUT".

The present invention has been described hereinbefore with reference to a preferred embodiment thereof as applied to a system in which the code conversion table and the purpose selection code are stored in the service processing unit and in a device outside the terminal equipment, however, the same results are obtained if the codes are processed within the terminal equipment and a simple switch as shown in Fig. 8 may be employed instead of the flexible disk device.

As described hereinbefore, according to the present invention, the modification of the terminal equipment requires a reduced number of replacement parts as compared with the conventional terminal equipment, and hence the terminal equipment can be modified very simply and at a moderate cost. Furthermore, since the contents of the replacement parts can be confirmed visually, which is impossible in the replacement, for example, of a ROM, the faulty replacement of the parts in modifying the terminal equipment is obviated.

13

WHAT IS CLAIMED IS:

1.      A code control system of a terminal equipment comprising a code generator which generates a code corresponding to a predetermined key of a keyboard when the predetermined key is pressed; a character generator which generates data to be displayed on a display unit; and an interface device connecting the terminal equipment to an external device, wherein character patterns corresponding to a plurality of purposes are stored beforehand in the character generator and is connected to a purpose selection code setting means for setting purpose selection codes beforehand  in a processing unit capable of storing selectively a plurality of purpose selection code conversion tables and/or a plurality of character display data code conversion tables, and the conversion of a purpose selection code and/or a character display code is performed by the processing unit without modifying the code generator and the character generator.

2.      A code control system of a terminal equipment according to Claim 1, wherein said processing unit is either an independent service processing unit or a common processing unit provided within the terminal equipment.

14

3.      A code control system of a terminal equipment
according to Claim 1, wherein said purpose selection
code setting means is an external memory.


4.      A code control system of a terminal equipment
according to Claim 1, wherein said purpose selection
code setting means is a switch.

# FIG. 1
# (PRIOR ART)

6

3

4

CHARACTER
GENERATOR

5

7

SERVICE
PROCESSING
UNIT

INTERFACE
UNIT

CODE
GENERATOR

2

1

# FIG. 2

18

EXTERNAL
MEMORY

16

3

14

CHARACTER
GENERATOR

17

SERVICE
PROCESSING
UNIT

INTERFACE
UNIT

5

CODE
GENERATOR

2

1

0137991

# FIG. 3

**(U.S.A)**

18 — EXTERNAL MEMORY CODE "0"

17 — CODE"58" — 19 — CODE CONVERSION TABLE

16 — INTERFACE UNIT — 5 — CODE"24" — CODE GENERATOR — 2 — 1a

**(U.K)**

18 — EXTERNAL MEMORY CODE "1"

17 — CODE"78" — 19 — CODE CONVERSION TABLE

16 — INTERFACE UNIT — 5 — CODE"24" — CODE GENERATOR — 2 — 1b

FIG. 4

0137991

3/6

(U.S.A)                    (SPAIN)

# FIG. 5

FIG. 6

CHARACTER DISPLAY CODE CONVERSION TABLE — 20

CHARACTER GENERATOR — 14

CONT-ROLLER — 30

INTERFACE PART — 31

INTERFACE UNIT — 5

CODE CONVERSION TABLE — 19

CODE GENERATOR — 2

EXTERNAL MEMORY — 18

DETECTOR

"1" (U.S.A)

"2" (U.K)

K1 — 32

1b (U.K)

1a (U.S.A)

0137991

5/6

6/6

0137991

# FIG. 7

```
                    ENTER.

=CONFIGURATION SELECT (A00)=

 E FRAME CHANGE                        -CONSOLE MODE-
                                   M SELECT MODE(0-1) -M0-
  -SET ADRS-                       G DEFAULT MODE(0-1)-M0-
 A AUTO IPL DEVICE(000-FFF)-381-
                                   O REMOTE OFF
  -SVP FUNC-                       N REMOTE ON
 L LOGOUT INITIATE
 V FDD COPY                        S USER ID ALPHA
                                   J USER ID NUMERIC
  -AVR CTRl-                       U REMOTE IS COUPLER ( 0=YES 1=NO )
 R RESET ABR MODE                  Z REMOTE BAUD-RATE ( 0=300 1=1200
 H SET ABR MODE
 C ABR RETRY COUNT(0-9)     -3-    ***CONSOLE MODE TABLE ***
                                           SCC    RMT
 K KEYBOAD TYPE (0-7)              M0  MAIN   SPRT
   0 USA              1 UNITED KINGDOM  M1  MAIN   MAIN
   2 GERMANY          3 SPAIN
   4 FRANCE           5 DENMARK/NORWAY
   6 SWEDEN/FINLAND  7 ITALY
```

# FIG. 8

```
                      (U.S.A)
           (ITALY)          (U.K.)
                      0
                  7       1
(SWEDEN / FINLAND)  6    2  (GERMANY)
                  5       3
                      4
   (DENMARK / NORWAY)        (SPAIN)
                  (FRANCE)
```

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | PATENTS ABSTRACTS OF JAPAN, vol. 6, no. 5(P-97)(883), 13th January 1982; & JP - A - 56 129 939 (MITSUBISHI DENKI K.K.) 12-10-1981 * Abstract * | 1-4 | G 06 F 3/023 |
| Y | US-A-4 213 124 (BARDA et al.) * Figures 1,2; column 1, line 57 - column 2, line 37 * | 1-4 | |
| Y | PATENTS ABSTRACTS OF JAPAN, vol. 7, no. 42(P-177)(1187), 19th February 1983; & JP - A - 57 191 734 (HOKUSHIN DENKI SEISAKUSHO K.K.) 25-11-1982 * Abstract * | 3 | |
| Y | IBM TECHNICAL DISCLOSURE BULLETIN, vol. 10, no. 7, December 1967, pages 888,889, New York, USA; M. DAVIS et al.: "Polarized mode selector" * Page 888, figure and paragraph 3 * | 4 | TECHNICAL FIELDS SEARCHED (Int. Cl.4) G 06 F H 04 N |

--- -/-

| | | |
|---|---|---|
| The present search report has been drawn up for all claims | | |
| Place of search THE HAGUE | Date of completion of the search 18-12-1984 | Examiner BECKER K.H. |

| | **DOCUMENTS CONSIDERED TO BE RELEVANT** | | | Page 2 |
|---|---|---|---|---|
| Category | Citation of document with indication, where appropriate, of relevant passages | | Relevant to claim | CLASSIFICATION OF THE APPLICATION (Int. Cl.4) |
| A | IBM TECHNICAL DISCLOSURE BULLETIN, vol. 24, no. 7B, December 1981, pages 3728-3731, New York, USA; D.G. BUSCH et al.: "Multilingual EBCDIC translation for asynchronous communication" * Figure; pages 3730-3731 * | | 1,2 | |
| A | IBM TECHNICAL DISCLOSURE BULLETIN, vol. 23, no. 7A, December 1980, pages 2937-2939, New York, USA; J.P. DAHL et al.: "Table selection of key type, data and scan order" * Figure; page 2938, paragraph 1 * | | 1,2 | |
| A | IBM TECHNICAL DISCLOSURE BULLETIN, vol. 19, no. 8, January 1977, pages 2853-2855, New York, USA; L.P. ANDREWS et al.: "Upper/lower case and keyboard redefine feature for word processor and electronic keyboard character translation redefinition" * Figures 1,3; page 2855, lines 9-33 * | | 1 | TECHNICAL FIELDS SEARCHED (Int. Cl.4) |
| A | US-A-4 202 041 (KAPLOW et al.) * Figures 4,5,8; column 2, line 59 - column 5, line 25 * | | 1,2,4 | |

The present search report has been drawn up for all claims

| Place of search THE HAGUE | Date of completion of the search 18-12-1984 | Examiner BECKER K.H. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82